# EUROPEAN PATENT APPLICATION

(11) **EP 2 685 386 A1**
(43) Date of publication of application: **15.01.2014**
(21) Application number: 13154066.8
(22) Date of filing: 05.02.2013
(51) Int. Cl.: G06F 13/40

(54) **Transmission apparatus and transmission method**

(30) Priority: 29.06.2012 JP 2012146886
(71) Applicant: Kabushiki Kaisha Toshiba, Tokyo 105-8001 (JP)
(72) Inventor: Doi, Takashi, Tokyo, 105-8001 (JP); Nair, Prashob Ramachandran, Tokyo, 105-8001 (JP); Miyazato, Hideki, Tokyo, 105-8001 (JP)
(74) Representative: Henkel, Breuer & Partner

(57) **Abstract**

According to one embodiment, a transmission apparatus includes a first switching module (43, 47, 55, 59) and a second switching module (44, 45, 50, 51, 56, 57, 62, 63). The first switching module is configured to be selectively switched to a first state for transmitting electric power using a power supply line (13a) and a second state for transmitting the electric power using a plurality of lines including the power supply line. The second switching module is configured to be selectively switched to a third state for transmitting a control signal using a control line (13b) and a fourth state for transmitting the control signal using a plurality of lines including the control line (13b).

## Description

Embodiments described herein relate generally to a transmission apparatus and a transmission method for transmitting a digital signal and power supply electric power.

As is well known, the High-definition Multimedia Interface (HDMI) standard is widely prevalent as a standard for transmitting a digital signal such as video and audio. In recent years, the Mobile High-definition Link (MHL) standard has been employed as a digital signal transmission standard which has been made by enhancing the HDMI standard for portable devices.

This MHL standard defines various provisions suitable for high-speed video signal transmission for portable devices, which includes enabling connection using a small connector supporting the micro Universal Serial Bus (USB) standard, enabling high-speed transmission of an uncompressed digital video signal to a sink device from a source device which is a portable device, enabling power supply electric power to be provided from a sink device to a source device, and enabling cooperated operation between a source device and a sink device.

However, the current MHL standard involves many issues which are inconvenient in practical use. For example, the power supply electric power is transmitted using a single power supply line called a voltage bus (VBUS), and therefore, the electric power that can be transmitted is limited, and the provided electric power cannot be easily increased under the current circumstances.

Signal transmission of video, audio, and the like and control signals for controlling device cooperated operation and the like are transmitted in both directions using a single control signal line called a control bus (CBUS), but the upper limit of the transmission speed is specified as 1 Mbps, and therefore, the transmission speed of the control signal cannot be easily increased under the current circumstances.

A general architecture that implements the various features of the embodiments will now be described with reference to the drawings. The drawings and the associated descriptions are provided to illustrate the embodiments and not to limit the scope of the invention.
FIG. 1 is a block configuration diagram for schematically illustrating and explaining an example of a transmission system according to an embodiment;
FIG. 2 is a block configuration diagram for schematically illustrating and explaining an example of a signal processing system of a digital television broadcast reception apparatus constituting the transmission system according to the embodiment;
FIG. 3 is a block configuration diagram for schematically illustrating and explaining an example of the signal processing system of a portable terminal constituting the transmission system according to the embodiment;
FIG. 4 is a block configuration diagram for illustrating and explaining an example of a connection state between a portable terminal and a digital television broadcast reception apparatus constituting the transmission system according to the embodiment;
FIG. 5 is a flowchart for illustrating and explaining an example of main processing operation performed by the digital television broadcast reception apparatus constituting the transmission system according to the embodiment; and
FIG. 6 is a block configuration diagram for illustrating and explaining an example of a modification of a connection state between a portable terminal and a digital television broadcast reception apparatus constituting the transmission system according to the embodiment.

Various embodiments will be described hereinafter with reference to the accompanying drawings.

In general, according to one embodiment, a transmission apparatus is based on a transmission standard for transmitting power supply electric power with a single power supply line, transmitting a control signal with a single control signal line, and transmitting a signal corresponding to any one of video and audio with a pair of differential lines. The first switching module and the second switching module are provided. The first switching module is configured to be selectively switched to a first power supply electric power transmission state for transmitting the power supply electric power using only the power supply line and a second power supply electric power transmission state for transmitting the power supply electric power using a plurality of lines including the power supply line and any one of the control signal line and the pair of differential lines. The second switching module is configured to be selectively switched to a first control signal transmission state for transmitting the control signal using only the control signal line and a second control signal transmission state for transmitting the control signal using a plurality of lines including the control signal line and any one of the power supply line and the pair of differential lines.

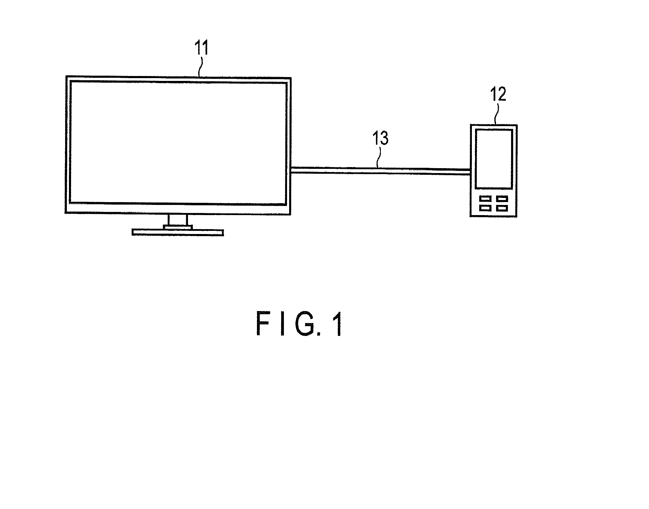

FIG. 1 schematically illustrating an example of a transmission system explained in this embodiment. More specifically, this transmission system is configured such that a digital television broadcast reception apparatus 11, i.e., an example of a sink device, and a portable terminal 12, i.e., an example of a source device, are connected so as to enable transmission of a signal and power supply electric power according to a method based on current MHL standard using an MHL cable 13.

Among them, the digital television broadcast reception apparatus 11 can receive a digital television broadcast signal and restore a video signal and an audio signal of a desired channel to display video and reproduce audio. This digital television broadcast reception apparatus 11 can display video and reproduce audio by receiving a video signal and an audio signal provided from the portable terminal 12 via the MHL cable 13.

Further, this digital television broadcast reception apparatus 11 can also provide power supply electric power via the MHL cable 13 to the portable terminal 12. This digital television broadcast reception apparatus 11 can cause the portable terminal 12 to perform cooperated operation by transmitting a control signal to the portable terminal 12 via the MHL cable 13.

On the other hand, the portable terminal 12 includes telephone function, e-mail function, camera function, reception function of broadcast signal, access function to a server on a network, and the like, and can display video and reproduce audio using a video signal and an audio signal obtained by various kinds of functions. This portable terminal 12 provides the obtained video signal and the obtained audio signal to the digital television broadcast reception apparatus 11 via the MHL cable 13, and can cause the digital television broadcast reception apparatus 11 to display video and reproduce audio.

Further, this portable terminal 12 can, for example, drive itself and charge an internal battery, using power supply electric power provided from the digital television broadcast reception apparatus 11 via the MHL cable 13. This portable terminal 12 can cause the digital television broadcast reception apparatus 11 to perform cooperated operation by transmitting a control signal to the digital television broadcast reception apparatus 11 via the MHL cable 13.

The MHL cable 13 has a configuration based on the current MHL standard. More specifically, it is constituted by five lines, i.e., a single power supply line (VBUS) for providing power supply electric power from the digital television broadcast reception apparatus 11 to the portable terminal 12, a single control signal line (CBUS) for transmitting a control signal between the digital television broadcast reception apparatus 11 and the portable terminal 12, a pair of differential lines [MHL (+) and MHL (-)] for transmitting a video signal and an audio signal from the portable terminal 12 to the digital television broadcast reception apparatus 11, and a single ground line (GND).

In this case, like the HDMI standard, the video signal and the audio signal are transmitted to the digital television broadcast reception apparatus 11 from the portable terminal 12 by means of the pair of differential lines (MHL+ and MHL-) while the signals are modulated in a mode based on the transmission minimized differential signaling (TMDS) method.

At this moment, although the details are described later, the digital television broadcast reception apparatus 11 is not only connected to the portable terminal 12 so as to allow transmission of power supply electric power and a control signal according to a method based on the current MHL standard (for example, the MHL 1.0 standard, MHL 2.0 standard, or the like), but also configured to enable connect with the portable terminal 12 so as to allow transmission of the power supply electric power and the control signal by increasing the magnitude and the transmission speed of the power supply electric power and the control signal than the current ones as long as the portable terminal 12 has a compatible configuration.

More specifically, using a method based on the current MHL standard, i.e., using the single power supply line (VBUS) and the control signal line (CBUS), the digital television broadcast reception apparatus 11 is configured to be selectively switchable between a first transmission state in which the power supply electric power and the control signal are transmitted with the portable terminal 12 and a second transmission state in which the power supply electric power and the control signal are transmitted by increasing the magnitude and the transmission speed with the portable terminal 12 than the current ones by sharing multiple lines constituting the MHL cable 13 as long as the portable terminal 12 has a compatible configuration.

Then, first, the digital television broadcast reception apparatus 11 communicates with the portable terminal 12 in the first transmission state using the control signal, and as long as the portable terminal 12 is compatible with the second transmission state as a result of the communication, the digital television broadcast reception apparatus 11 switches to the second transmission state to execute transmission of the power supply electric power and the control signal.

When, as a result of communication with the portable terminal 12 in the first transmission state using the control signal, the portable terminal 12 is determined not to be compatible with the second transmission state, the digital television broadcast reception apparatus 11 transmits the power supply electric power and the control signal still in the first transmission state, i.e., according to the method based on the current MHL standard.

Accordingly, the digital television broadcast reception apparatus 11 can maintain compatibility with the current MHL standard, and in addition, can increase the power supply electric power provided to the portable terminal 12 and increase the transmission speed of the control signal, so that this can improve the convenience for the user and makes it practical.

The above explanation indicates that the digital television broadcast reception apparatus 11 which is a sink device includes a configuration selectively switchable to the first and second transmission states, and switches the transmission state of itself in accordance with which of the transmission states the portable terminal 12, i.e., the source device, is compatible with.

In contrast, the portable terminal 12, i.e., the source device, may be configured to be selectively switchable to the first and second transmission states, and may switch the transmission state of itself in accordance with which of the transmission states the digital television broadcast reception apparatus 11, i.e., the sink device, is compatible with.

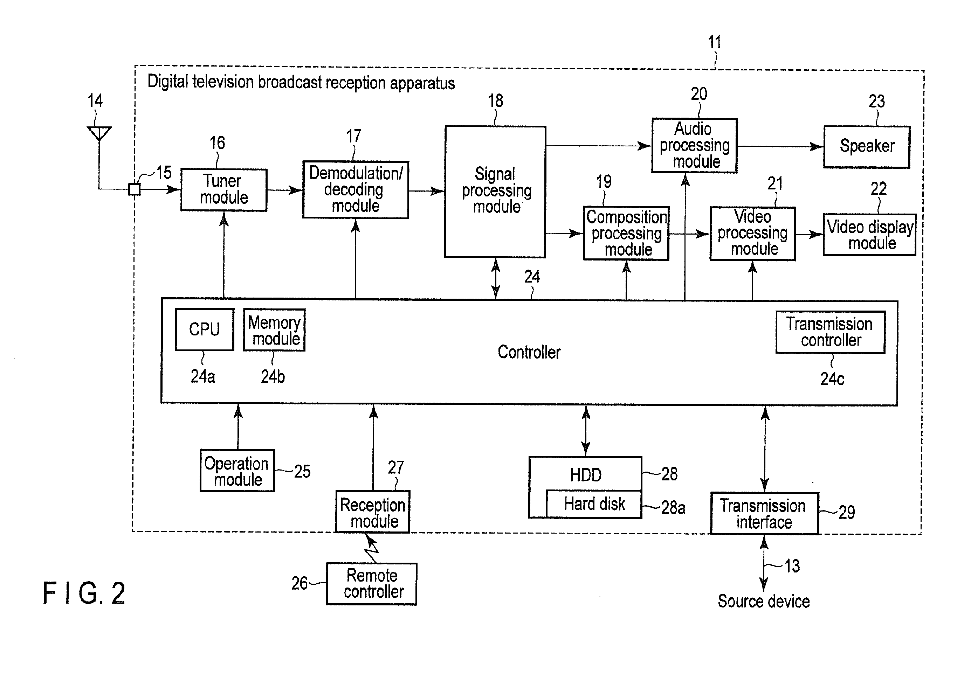

FIG. 2 schematically illustrates an example of a signal processing system of the digital television broadcast reception apparatus 11. More specifically, a digital television broadcast signal received by an antenna 14 is provided to a tuner module 16 via an input terminal 15, which tunes in to a broadcast signal of a desired channel. The broadcast signal to which the tuner module 16 tunes in is provided to a demodulation/decoding module 17, and is restored as a digital video signal and a digital audio signal. Thereafter, it is output to a signal processing module 18.

The signal processing module 18 performs predetermined digital signal processing on the digital video signal and the digital audio signal provided from the demodulation/decoding module 17. Then, the signal processing module 18 outputs the digital video signal to a composition processing module 19, and outputs the digital audio signal to an audio processing module 20.

Among them, the composition processing module 19 superimposes an on-screen display (OSD) signal onto the digital video signal provided from the signal processing module 18, and outputs the OSD signal. The digital video signal which is output from this composition processing module 19 is provided to the video processing module 21, and is converted into an analog video signal in a format that can be displayed by the video display module 22 in a later stage, and is thereafter provided to the video display module 22 for video display.

On the other hand, the audio processing module 20 converts the received digital audio signal into an analog audio signal in a format for reproduction with the speaker 23 in a later stage. Then, the analog audio signal output from the audio processing module 20 is provided to the speaker 23, and is reproduced as a sound.

In this case, in the digital television broadcast reception apparatus 11, the controller 24 centrally controls all operations including various kinds of reception operations as described above. This controller 24 includes a central processing unit (CPU) 24a, and receives operation information from an operation module 25 provided on the main body of the digital television broadcast reception apparatus 11 or operation information transmitted from the remote controller 26 and received by the reception module 27, thus controlling each module so as to reflect the contents of operation thereof.

In this case, the controller 24 uses a memory module 24b. The memory module 24b mainly includes a read-only memory (ROM) for storing a control program executed by the CPU 24a, a random access memory (RAM) for providing a work area to the CPU 24a, and a nonvolatile memory for storing various kinds of setting information, control information, and the like.

This controller 24 is connected to a hard disk drive (HDD) 28. This controller 24 provides the digital video signal and the digital audio signal obtained from the signal processing module 18 to the HDD 28, on the basis of user's operation with the operation module 25 and the remote controller 26, and can perform control so as to record them to the hard disk 28a.

In addition, based on operation of the operation module 25 and the remote controller 26 by a user, the controller 24 controls the HDD 28 so that the digital video signal and the video audio signal are read from the hard disk 28a, and are provided to the signal processing module 28, so that the signals are displayed as a video and reproduced as a sound as described above.

This controller 24 is connected to a transmission interface 29. This transmission interface 29 is in turn connected to the portable terminal 12, which is the source device, via the MHL cable 13. This transmission interface 29 includes, for example, a function of executing transmission of power supply electric power and transmission/reception of various kinds of signals to/from the portable terminal 12 on the basis of the control by the controller 24 and a function of selectively switching the first and second transmission states explained above.

Further, this controller 24 is provided with a transmission controller 24c. This transmission controller 24c performs, for example, generation of various kinds of signals transmitted to the portable terminal 12, control of the power supply electric power, processing of various kinds of signals received from the portable terminal 12, and control of various kinds of functions performed by the transmission interface 29.

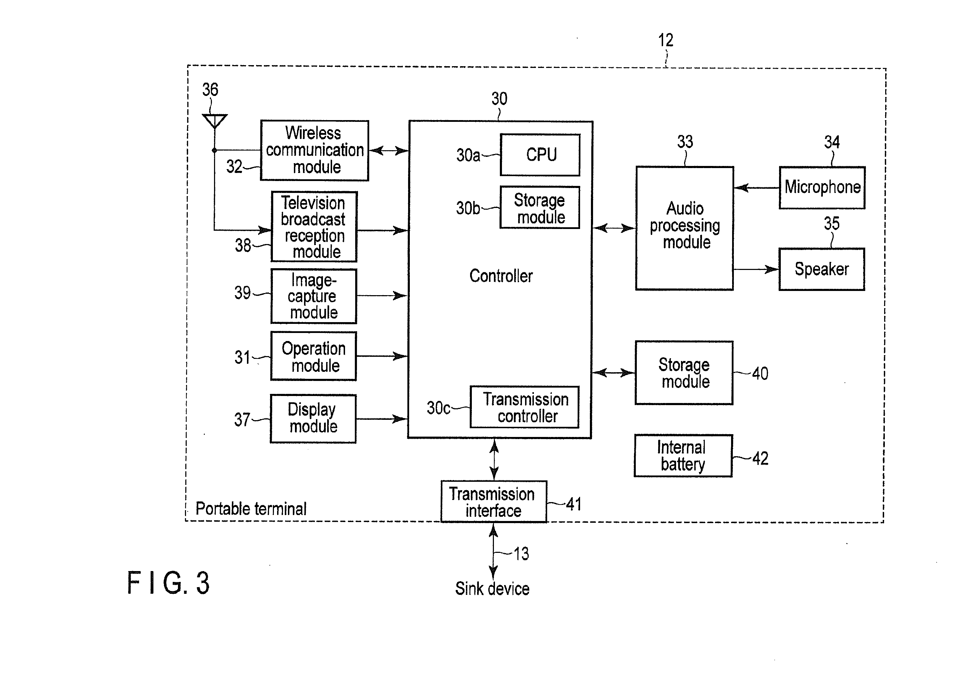

FIG. 3 schematically illustrates an example of a signal processing system of the portable terminal 12. More specifically, this portable terminal 12 is provided with a controller 30 for centrally controlling all of the operations thereof. This controller 30 includes, for example, a CPU 30a, and receives operation information from the operation module 31, thus controlling each module so as to reflect the contents of operation thereof.

In this case, the controller 30 uses a storage module 30b. The storage module 30b mainly includes a ROM for storing a control program executed by the CPU 30a, a RAM for providing a work area to the CPU 30a, and a nonvolatile memory for storing various kinds of setting information, control information, and the like.

In this case, the controller 30 is connected to a wireless communication module 32 and an audio processing module 33. The audio processing module 33 is connected to a microphone 34 and a speaker 35. Then, the controller 30 transmits the audio signal, which is collected by the microphone 34 and provided via the audio processing module 33, via the wireless communication module 32 and the antenna 36. On the other hand, the controller 30 reproduces the signal, which is received by the antenna 36 and provided via the wireless communication module 32, as the audio signal by providing it to the speaker 35 via the audio processing module 33. Accordingly, the controller 30 achieves the telephone function.

Further, the controller 30 controls transmission/reception of e-mails via the wireless communication module 32 and the antenna 36. In this case, the controller 30 causes the display module 37 to display the text of a mail which is to be transmitted or received.

For example, the controller 30 accesses, via the wireless communication module 32 and the antenna 36, a server (not shown) connected to a network such as the Internet, and can obtain required information therefrom by means of wireless communication.

Further, the controller 30 is connected to the television broadcast reception module 38. This television broadcast reception module 38 tunes in to and demodulates a broadcast signal of a desired channel from a television broadcast signal received via the antenna 36, generates a video signal and an audio signal, and provides them to the controller 30. For this reason, the controller 30 causes the display module 37 to display video on the basis of the video signal, and reproduces audio with the speaker based on the audio signal, thus achieving the television broadcast reception function.

Further, the controller 30 is connected to an image-capture module 39. This image-capture module 39 generates a video signal corresponding to an optical image of a subject incident via an image-capture lens (not shown), and provides it to the controller 30. The controller 30 achieves the camera function by storing the video signal provided from the image-capture module 39 to the storage module 40.

This controller 30 can store, to the storage module 40, various kinds of video signals and audio signals transmitted/received with the telephone function, the e-mail function, the broadcast reception function, the camera function, the network access function, and the like explained above.

The controller 30 is connected to the transmission interface 41. This transmission interface 41 is connected to the digital television broadcast reception apparatus 11, which is the sink device, via the MHL cable 13. This transmission interface 41 includes, for example, a function of transmission/reception of various kinds of signals to/from the digital television broadcast reception apparatus 11 on the basis of the control by the controller 30 and reception of power supply electric power from the digital television broadcast reception apparatus 11 and a function of selectively switching the first and second transmission states explained above.

Further, this controller 30 is provided with a transmission controller 30c. This transmission controller 30c performs, for example, generation of various kinds of signals transmitted to the digital television broadcast reception apparatus 11, processing of power supply electric power and various kinds of signals received from the digital television broadcast reception apparatus 11, and control of various kinds of function performed by the transmission interface 41.

Further, this portable terminal 12 drives itself and charges the internal battery 42, using power supply electric power provided from the digital television broadcast reception apparatus 11, in a state in which the portable terminal 12 is connected to the digital television broadcast reception apparatus 11 via the MHL cable 13. When the connection with the digital television broadcast reception apparatus 11 is disconnected, the portable terminal 12 is driven by electric power of the internal battery 42.

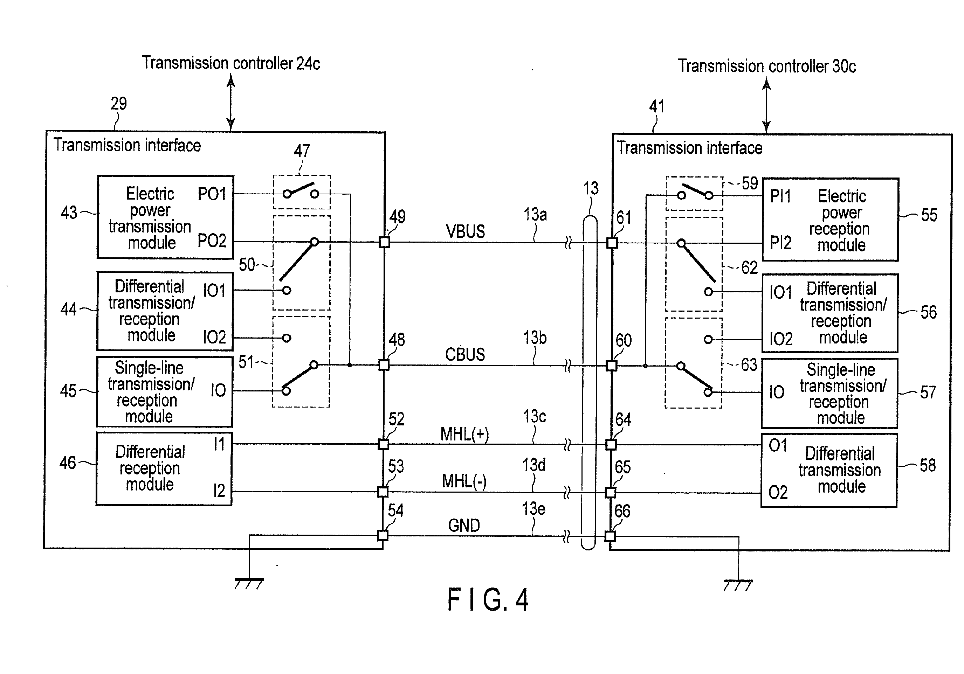

FIG. 4 illustrates an example of the transmission interface 29 provided in the digital television broadcast reception apparatus 11 and an example of the transmission interface 41 provided in the portable terminal 12. More specifically, the transmission interface 29 includes an electric power transmission module 43 for outputting power supply electric power provided to the portable terminal 12. This electric power transmission module 43 includes two electric power transmission terminals PO1 and PO2, and both of electric power transmission terminals PO1 and PO2 output the power supply electric power of a predetermined magnitude.

The transmission interface 29 also includes a differential transmission/reception module 44 and a single-line transmission/reception module 45 for transmitting/receiving a control signal to/from the portable terminal 12. Among them, differential transmission/reception module 44 includes two input/output terminals IO1 and IO2, and capable of transmission/reception of the control signal in a form of differential signal. Single-line transmission/reception module 45 is capable of transmission/reception of the control signal with a single line via input/output terminal IO.

Further, the transmission interface 29 includes a differential reception module 46 for receiving a video signal and an audio signal which are output from the portable terminal 12. This differential reception module 46 includes two input terminals I1 and I2, and can receive a video signal and an audio signal, which are output from the portable terminal 12, in a form of differential signal.

Electric power transmission terminal PO1 of the electric power transmission modules 43 is connected via a switch 47 with a control signal terminal 48. Switch 47 has a function of connecting or disconnecting electric power transmission terminal PO1 and the control signal terminal 48. The control signal terminal 48 is connected to an end of the control signal line (CBUS) 13b of the MHL cable 13. Further, electric power transmission terminal PO2 of the electric power transmission module 43 is connected to a power supply terminal 49. This power supply terminal 49 is connected to an end of the power supply line (VBUS) 13a of the MHL cable 13.

Input/output terminal IO1 of differential transmission/reception module 44 is connected via a switch 50 with a power supply terminal 49. Switch 50 has a function of connecting or disconnecting input/output terminal IO1 and the power supply terminal 49. Further, input/output terminal IO2 of differential transmission/reception module 44 and input/output terminal IO of single-line transmission/reception module 45 are selectively switched and connected to a control signal terminal 48 by a switch 51.

Input terminal I1 of the differential reception module 46 is connected to a differential input terminal 52. This differential input terminal 52 is connected to one end of differential line [MHL (+)] 13c of the MHL cable 13. Input terminal I2 of the differential reception module 46 is connected to a differential input terminal 53. This differential input terminal 53 is connected to one end of differential line [MHL (-)] 13d of the MHL cable 13. Further, the ground terminal 54 is connected to one end of the ground line (GND) 13e of the MHL cable 13.

On the other hand, the transmission interface 41 includes an electric power reception module 55 for receiving the power supply electric power provided from the digital television broadcast reception apparatus 11. This electric power reception module 55 includes two electric power reception terminals PI1 and PI2, and each of electric power reception terminals PI1 and PI2 can receive the power supply electric power.

The transmission interface 41 includes a differential transmission/reception module 56 and a single-line transmission/reception module 57 for transmission/reception of the control signal with the digital television broadcast reception apparatus 11. Among them, differential transmission/reception module 56 includes two input/output terminals IO1 and IO2, and is capable of transmission/reception of the control signal in a form of differential signal. Single-line transmission/reception module 57 is capable of transmission/reception of the control signal via input/output terminal IO via a single line.

Further, the transmission interface 41 includes a differential transmission module 58 for transmitting a video signal and an audio signal provided to the digital television broadcast reception apparatus 11. This differential transmission module 58 includes two output terminals O1 and O2, and can transmit the video signal and the audio signal to the digital television broadcast reception apparatus 11 in a form of differential signal.

Electric power reception terminal PI1 of the electric power reception module 55 is connected via a switch 59 with a control signal terminal 60. Switch 59 has a function of connecting or disconnecting electric power reception terminal PI1 and the control signal terminal 60. The control signal terminal 60 is connected to the other end of the control signal line (CBUS) 13b of the MHL cable 13. Further, electric power reception terminal PI2 of the electric power reception module 55 is connected to a power supply terminal 61. This power supply terminal 61 is connected to the other end of the power supply line (VBUS) 13a of the MHL cable 13.

Input/output terminal IO1 of differential transmission/reception module 56 is connected via a switch 62 with a power supply terminal 61. Switch 62 has a function of connecting or disconnecting input/output terminal IO1 and the power supply terminal 61. Further, input/output terminal IO2 of differential transmission/reception module 56 and input/output terminal IO of single-line transmission/reception module 57 are selectively switched and connected to a control signal terminal 60 by a switch 63.

Output terminal O1 of the differential transmission module 58 is connected to a differential output terminal 64. This differential output terminal 64 is connected to the other end of differential line [MHL (+)] 13c of the MHL cable 13. Output terminal O2 of the differential transmission module 58 is connected to a differential output terminal 65. This differential output terminal 65 is connected to the other end of differential line [MHL (-)] 13d of the MHL cable 13. Further, the ground terminal 66 is connected to the other end of the ground line (GND) 13e of the MHL cable 13.

In this case, now, suppose that switches 47, 50, 51 of the transmission interface 29 and switches 59, 62, 63 of the transmission interface 41 are respectively in switching positions as shown in FIG. 4. More specifically, switch 47 is in the OFF position for disconnecting electric power transmission terminal PO1 of the electric power transmission module 43 and the control signal terminal 48, switch 50 is in the OFF position for disconnecting input/output terminal IO1 of differential transmission/reception module 44 and the power supply terminal 49, switch 51 is in a position for connecting input/output terminal IO of single-line transmission/reception module 45 and the control signal terminal 48, switch 59 is in the OFF position for disconnecting electric power reception terminal PI1 of the electric power reception module 55 and the control signal terminal 60, switch 62 is in the OFF position for disconnecting input/output terminal IO1 of differential transmission/reception module 56 and the power supply terminal 61, switch 63 is in a position for connecting input/output terminal IO of single-line transmission/reception module 57 and the control signal terminal 60.

Then, electric power transmission terminal PO2 of the electric power transmission module 43 is connected via the power supply terminal 49, the power supply line (VBUS) 13a of the MHL cable 13, and the power supply terminal 61 to electric power reception terminal PI2 of the electric power reception module 55, so that the power supply electric power is provided from electric power transmission terminal PO2 of the electric power transmission module 43 to electric power reception terminal PI2 of the electric power reception module 55.

Input/output terminal IO of single-line transmission/reception module 45 is connected via the control signal terminal 48, the control signal line (CBUS) 13b of the MHL cable 13, and the control signal terminal 60 to input/output terminal IO of single-line transmission/reception module 57, so that the control signal is transmitted in both directions between single-line transmission/reception module 45 and single-line transmission/reception module 57.

Output terminals O1 and O2 of the differential transmission module 58 are respectively connected via differential output terminals 64 and 65, differential lines [MHL (+) and MHL (-)] 13c and 13d of the MHL cable 13, and differential input terminals 52 and 53 to input terminals I1 and I2 of the differential reception module 46, so that the video signal and the audio signal are transmitted from the differential transmission module 58 to the differential reception module 46 in a form of differential signal.

As described above, in the state in which switches 47, 50, 51 of the transmission interface 29 and switches 59, 62, 63 of the transmission interface 41 are respectively in the switching positions as shown in FIG. 4, the power supply electric power is transmitted via the single power supply line (VBUS) 13a, and the control signal is also transmitted via the single control signal line (CBUS) 13b. More specifically, the method based on the current MHL standard, i.e., the power supply electric power and the control signal are transmitted with a single line, so that the above first transmission state is achieved.

On the other hand, suppose that switches 47, 50, 51 of the transmission interface 29 and switches 59, 62, 63 of the transmission interface 41 are respectively in switching positions opposite to the switching positions as shown in FIG. 4. More specifically, switch 47 is in the ON position for connecting electric power transmission terminal PO1 of the electric power transmission module 43 and the control signal terminal 48, switch 50 is in the ON position for connecting input/output terminal IO1 of differential transmission/reception module 44 and the power supply terminal 49, switch 51 is in a position for connecting input/output terminal IO2 of differential transmission/reception module 44 and the control signal terminal 48, switch 59 is in the ON position for disconnecting electric power reception terminal PI1 of the electric power reception module 55 and the control signal terminal 60, switch 62 is in the ON position for disconnecting input/output terminal IO1 of differential transmission/reception module 56 and the power supply terminal 61, switch 63 is in a position for connecting input/output terminal IO2 of differential transmission/reception module 56 and the control signal terminal 60.

Then, electric power transmission terminal PO1 of the electric power transmission module 43 is connected via switch 47, the control signal terminal 48, the control signal line (CBUS) 13b of the MHL cable 13, the control signal terminal 60, and switch 59 to electric power reception terminal PI1 of the electric power reception module 55, so that the power supply electric power is provided from electric power transmission terminal PO1 of the electric power transmission module 43 to electric power reception terminal PI1 of the electric power reception module 55.

More specifically, in this case, the power supply electric power is provided from electric power transmission terminal PO1 of the electric power transmission module 43 to electric power reception terminal PI1 of the electric power reception module 55, and as described above, the power supply electric power is also provided from electric power transmission terminal PO2 of the electric power transmission module 43 to electric power reception terminal PI2 of the electric power reception module 55, so that the transmitted power supply electric power can be increased twice as compared with the first transmission state.

Input/output terminal IO1 of differential transmission/reception module 44 is connected via switch 50, the power supply terminal 49, the power supply line (VBUS) 13a of the MHL cable 13, the power supply terminal 61, and switch 62 to input/output terminal IO1 of differential transmission/reception module 56, and input/output terminal IO2 of differential transmission/reception module 44 is connected via switch 51, the control signal terminal 48, the control signal line (CBUS) 13b of the MHL cable 13, the control signal terminal 60, and switch 63 to input/output terminal IO2 of differential transmission/reception module 56. Accordingly, the control signal can be transmitted between differential transmission/reception module 44 and differential transmission/reception module 56 in two directions in a form of differential signal, and the transmission speed of the control signal can be increased than that of the first transmission state.

As described above, in the state in which switches 47, 50, 51 of the transmission interface 29 and switches 59, 62, 63 of the transmission interface 41 are respectively in the switching positions opposite to the switching positions as shown in FIG. 4, both of the power supply electric power and the control signal are transmitted using two lines, i.e., the power supply line (VBUS) 13a and the control signal line (CBUS) 13b. More specifically, in contrast to the method based on the current MHL standard, the transmitted power supply electric power can be increased, and the transmission speed of the control signal can be increased, so that the above second transmission state is achieved.

In this case, for example, first, the transmission controller 24c of the digital television broadcast reception apparatus 11 controls switches 47, 50, 51 of the transmission interface 29 to be in the switching positions corresponding to the first transmission state, and communicates with the transmission controller 30c of the portable terminal 12 using the control signal, whereby a determination is made as to whether the portable terminal 12 is configured to be compatible with the second transmission state.

The configuration compatible with the second transmission state means that the portable terminal 12 includes the electric power reception module 55 including the two electric power reception terminals PI1 and PI2, differential transmission/reception module 56 including the two input/output terminals IO1 and IO2 and transmitting/receiving the control signal in a form of differential signal, switches 59, 62, 63, transmission controller 30c, and the like, and is configured such that both of the power supply electric power and the control signal are transmitted using two lines, i.e., the power supply line (VBUS) 13a and the control signal line (CBUS) 13b.

When the portable terminal 12 is determined to be configured to be compatible with the second transmission state, the transmission controller 24c controls switches 47, 50, 51 to be in the switching positions corresponding to the second transmission state, and commands the transmission controller 30c of the transmission controller 30c of the portable terminal 12 to control switches 59, 62, 63 of the transmission interface 41 to be in the switching positions corresponding to the second transmission state, whereby transmission of the power supply electric power and the control signal is executed in the second transmission state.

When the portable terminal 12 is determined not to be compatible with the second transmission state, i.e., when the portable terminal 12 is configured to be based on the current MHL standard, the transmission controller 24c executes the transmission of the power supply electric power and the control signal to the portable terminal 12 still in the first transmission state.

Accordingly, the digital television broadcast reception apparatus 11 can maintain compatibility with the current MHL standard, and in addition, can increase the power supply electric power provided to the portable terminal 12 and increase the transmission speed of the control signal, so that this can improve the convenience for the user and makes it practical.

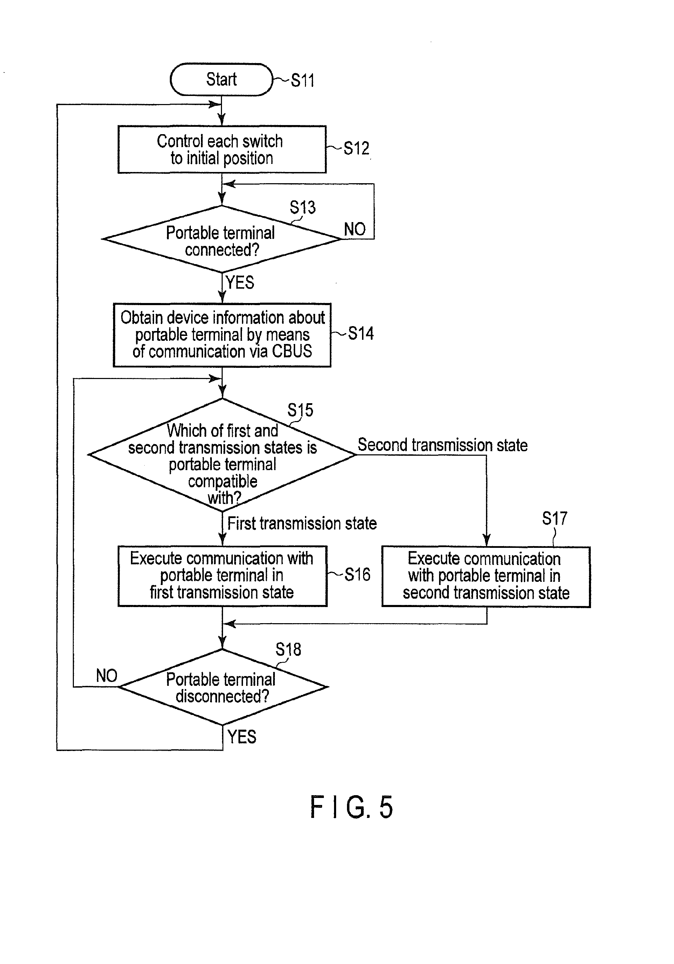

FIG. 5 illustrates a flowchart summarizing an example of main processing operation performed by the transmission controller 24c. More specifically, when processing starts (step S11), the transmission controller 24c changes switches 47, 50, 51 of the transmission interface 29 to the initial position in step S12, i.e., after they are controlled to be in the switching positions corresponding to the first transmission state, waiting state is attained in step S13 to wait for connection of the portable terminal 12 via the MHL cable 13 to the transmission interface 29.

When the portable terminal 12 is determined to be connected in this waiting state (YES), the transmission controller 24c uses single-line transmission/reception module 45 to communicate with the portable terminal 12 via the control signal by way of the control signal line (CBUS) 13b in step S14, and obtains device information about the portable terminal 12. Thereafter, in step S15, the transmission controller 24c determines whether the portable terminal 12 is configured to be compatible with any one of the first and second transmission states, on the basis of the obtained device information.

Then, when the portable terminal 12 is determined to be configured to be compatible with the first transmission state, the transmission controller 24c executes communication with the portable terminal 12 still in the first transmission state in step S16.

When the portable terminal 12 is determined to be configured to be compatible with the second transmission state in step S15, the transmission controller 24c controls switches 47, 50, 51 of the transmission interface 29 to be in the switching positions corresponding to the second transmission state in step S17, and commands the transmission controller 30c of the portable terminal 12 to control switches 59, 62, 63 of the transmission interface 41 to be in the switching positions corresponding to the second transmission state, so that communication with the portable terminal 12 is executed in the second transmission state.

Then, after step S16 or step S17, the transmission controller 24c determines whether connection of the portable terminal 12 to the transmission interface 29 is disconnected or not in step S18. When connection of the portable terminal 12 to the transmission interface 29 is determined not to be disconnected (NO), processing in step S15 is performed. When connection of the portable terminal 12 to the transmission interface 29 is determined to be disconnected (YES), processing in step S12 is performed.

In the above embodiment, the digital television broadcast reception apparatus 11, i.e., the sink device, is configured to be able to selectively switch to the first transmission state and the second transmission state, and is configured to switch the transmission state of itself in accordance with whether the portable terminal 12, i.e., the source device, is configured to be compatible with any of the transmission states.

In contrast, the portable terminal 12, i.e., the source device, may be configured to be able to selectively switch to the first transmission state and the second transmission state, and the digital television broadcast reception apparatus 11, i.e., the sink device, may be configured to switch the transmission state of itself in accordance with whether it is configured to be compatible with any of the transmission states.

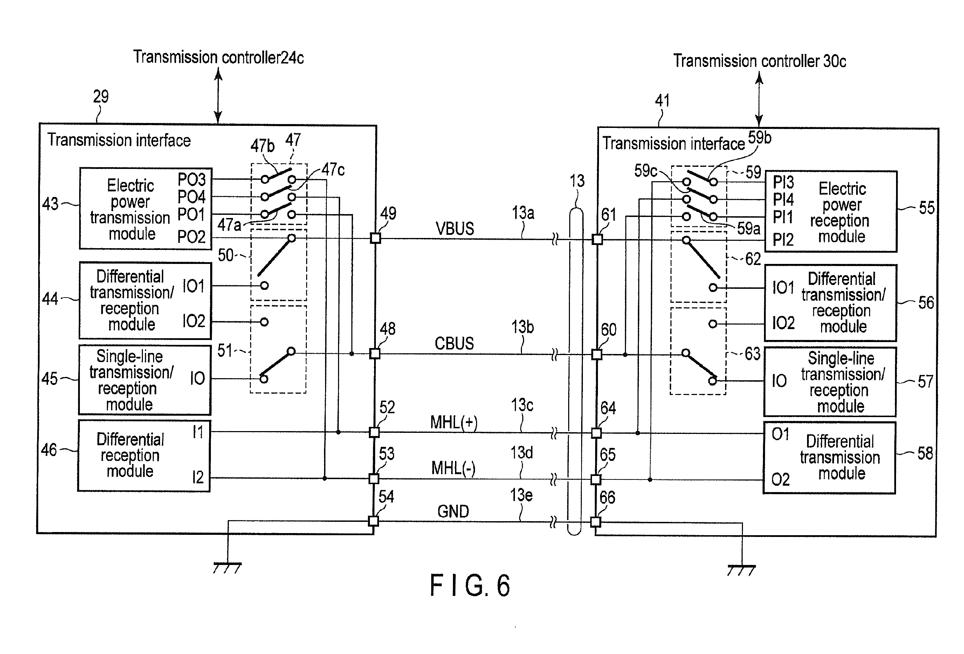

FIG. 6 illustrates a modification of transmission of power supply electric power in the above embodiment. In FIG. 6, the same portions as those of FIG. 4 are denoted with the same reference numbers. More specifically, the electric power transmission module 43 of the transmission interface 29 includes not only the two electric power transmission terminals PO1 and PO2 explained above but also two electric power transmission terminals PO3 and PO4, and each of electric power transmission terminals PO1 to PO4 outputs power supply electric power of a predetermined magnitude.

Switch 47 of the transmission interface 29 includes a first switch 47a for connecting or disconnecting electric power transmission terminal PO1 and the control signal terminal 48, a second switch 47b for connecting or disconnecting electric power transmission terminal PO3 and differential input terminal 53, and a third switch 47c for connecting or disconnecting electric power transmission terminal PO4 and differential input terminal 52. The switching positions of these switches 47a to 47c are controlled so that both are in the ON position and OFF position in a cooperative manner.

On the other hand, the electric power reception module 55 of the transmission interface 41 includes not only the two electric power reception terminals PI1 and PI2 explained above but also the two electric power reception terminals PI3 and PI4, and each of electric power reception terminals PI1 to PI4 receives the power supply electric power.

Switch 59 of the transmission interface 41 includes a first switch 59a for connecting or disconnecting electric power reception terminal PI1 and the control signal terminal 60, a second switch 59b for connecting or disconnecting electric power reception terminal PI3 and differential output terminal 65, and a third switch 59c for connecting or disconnecting electric power reception terminal PI4 and differential output terminal 64. The switching positions of these switches 59a to 59c are controlled so that both are in the ON position and OFF position in a cooperative manner.

In this case, now, suppose that the first to third switches 47a to 47c and the first to third switches 59a to 59c are respectively in switching positions as shown in FIG. 6. More specifically, the first switch 47a is in the OFF position for disconnecting electric power transmission terminal PO1 and the control signal terminal 48, the second switch 47b is in the OFF position for disconnecting electric power transmission terminal PO3 and differential input terminal 53, and the third switch 47c is in the OFF position for disconnecting electric power transmission terminal PO4 and differential input terminal 52, and the first switch 59a is in the OFF position for disconnecting electric power reception terminal PI1 and the control signal terminal 60, the second switch 59b is in the OFF position for disconnecting electric power reception terminal PI3 and differential output terminal 65, and the third switch 59c is in the OFF position for disconnecting electric power reception terminal PI4 and differential output terminal 64.

Then, electric power transmission terminal PO2 of the electric power transmission module 43 is connected via the power supply terminal 49, the power supply line (VBUS) 13a of the MHL cable 13, and the power supply terminal 61 to electric power reception terminal PI2 of the electric power reception module 55, so that the power supply electric power is provided from electric power transmission terminal PO2 of the electric power transmission module 43 to electric power reception terminal PI2 of the electric power reception module 55.

As described above, in the state in which each of the first to third switches 47a to 47c and the first to third switches 59a to 59c is in the switching position as shown in FIG. 6, the power supply electric power is transmitted via the single power supply line (VBUS) 13a. More specifically, the method based on the current MHL standard, i.e., the power supply electric power is transmitted with a single line, so that the above first transmission state is achieved.

On the other hand, suppose that the first to third switches 47a to 47c and the first to third switches 59a to 59c are respectively in switching positions opposite to the switching positions as shown in FIG. 6. More specifically, the first switch 47a is in the ON position for connecting electric power transmission terminal PO1 and the control signal terminal 48, the second switch 47b is in the ON position for connecting electric power transmission terminal PO3 and differential input terminal 53, and the third switch 47c is in the ON position for connecting electric power transmission terminal PO4 and differential input terminal 52, and the first switch 59a is in the ON position for connecting electric power reception terminal PI1 and the control signal terminal 60, the second switch 59b is in the ON position for connecting electric power reception terminal PI3 and differential output terminal 65, and the third switch 59c is in the ON position for connecting electric power reception terminal PI4 and differential output terminal 64.

Then, electric power transmission terminal PO1 of the electric power transmission module 43 is connected via switch 47, the control signal terminal 48, the control signal line (CBUS) 13b of the MHL cable 13, the control signal terminal 60, and the first switch 59a to electric power reception terminal PI1 of the electric power reception module 55, so that the power supply electric power is provided from electric power transmission terminal PO1 of the electric power transmission module 43 to electric power reception terminal PI1 of the electric power reception module 55.

Electric power transmission terminal PO3 of the electric power transmission module 43 is connected via the second switch 47b, differential input terminal 53, differential line [MHL (-)] 13d of the MHL cable 13, differential output terminal 65, and the second switch 59b to electric power reception terminal PI3 of the electric power reception module 55, so that the power supply electric power is provided from electric power transmission terminal PO3 of the electric power transmission module 43 to electric power reception terminal PI3 of the electric power reception module 55.

Further, electric power transmission terminal PO4 of the electric power transmission module 43 is connected via the third switch 47c, differential input terminal 52, differential line [MHL (+)] 13c of the MHL cable 13, differential output terminal 64, and the third switch 59c to electric power reception terminal PI4 of the electric power reception module 55, so that the power supply electric power is provided from electric power transmission terminal PO4 of the electric power transmission module 43 to electric power reception terminal PI4 of the electric power reception module 55.

More specifically, in this case, the power supply electric power is respectively provided from electric power transmission terminals PO1, PO3, PO4 of the electric power transmission module 43 to electric power reception terminals PI1, PI3, PI4 of the electric power reception module 55, and as described above, the power supply electric power is also provided from electric power transmission terminal PO2 of the electric power transmission module 43 to electric power reception terminal PI2 of the electric power reception module 55, so that the transmitted power supply electric power can be increased four times as compared with the first transmission state.

As described above, in the state in which each of the first to third switches 47a to 47c and the first to third switches 59a to 59c is in the switching position opposite to the switching position as shown in FIG. 6, the power supply electric power is transmitted via four lines including the power supply line (VBUS) 13a, the control signal line (CBUS) 13b, and differential lines [MHL (+) and MHL (-)] 13c, 13d. More specifically, in contrast to the method based on the current MHL standard, the transmitted power supply electric power can be increased, so that the above second transmission state is achieved.

It is to be understood that the control signal is also configured to be transmitted using four lines including the power supply line (VBUS) 13a, the control signal line (CBUS) 13b, and differential lines [MHL (+) and MHL (-)] 13c, 13d.

Further, in the explanation about the above embodiment, the digital television broadcast reception apparatus 11 is used as an example of a sink device, and the portable terminal 12 is used as an example of a source device. However, the sink device and the source device are not limited thereto, and various kinds of devices may be assumed.

## Claims

1. A transmission apparatus based on a transmission standard for transmitting power supply electric power with a single power supply line (13a), transmitting a control signal with a single control signal line (13b), and transmitting a signal corresponding to any one of video and audio with a pair of differential lines (13c, 13d), the transmission apparatus **characterized by** comprising:
a first switching module (43, 47, 55, 59) configured to be selectively switched and set to a first power supply electric power transmission state for transmitting the power supply electric power using only the power supply line (13a) and a second power supply electric power transmission state for transmitting the power supply electric power using a plurality of lines including the power supply line (13a) and any one of the control signal line (13b) and the pair of differential lines(13c, 13d); and
a second switching module (44, 45, 50, 51, 56, 57, 62, 63) configured to be selectively switched and set to a first control signal transmission state for transmitting the control signal using only the control signal line (13b) and a second control signal transmission state for transmitting the control signal using a plurality of lines including the control signal line (13b) and any one of the power supply line (13a) and the pair of differential lines (13c, 13d).

2. The transmission apparatus of Claim 1, **characterized in that** the first and second switching modules (43, 47, 55, 59), (44, 45, 50, 51, 56, 57, 62, 63) are configured to be selectively switched and set to a first transmission state for respectively being set to the first power supply electric power transmission state and the first control signal transmission state and a second transmission state for respectively being set to the second power supply electric power transmission state and the second control signal transmission state.

3. The transmission apparatus of Claim 1, **characterized in that** the first switching module (43, 47, 55, 59) is configured to set to the first power supply electric power transmission state by disconnecting, with a switch (47), a transmission terminal (PO1, PO2) of the transmitted power supply electric power and any one of the control signal line (13b) and the pair of differential lines (13c, 13d), and the second power supply electric power transmission state by connecting, with the switch (47), the transmission terminal of the transmitted power supply electric power and any one of the control signal line (13b) and the pair of differential lines (13c, 13d).

4. The transmission apparatus of Claim 1, **characterized in that** the first switching module (43, 47, 55, 59) is configured to set to the first power supply electric power transmission state by disconnecting, with a switch (59), a reception terminal (PI1, PI2) of the transmitted power supply electric power and any one of the control signal line (13b) and the pair of differential lines (13c, 13d), and the second power supply electric power transmission state by connecting, with the switch (59), the reception terminal (PI1, PI2) of the transmitted power supply electric power and any one of the control signal line (13b) and the pair of differential lines (13c, 13d).

5. The transmission apparatus of Claim 1, **characterized in that** the second switching module (44, 45, 50, 51, 56, 57, 62, 63) includes:
a single-line transmission/reception module (45, 57) configured to transmit/receive the control signal with the single line;
a differential transmission/reception module (44, 56) configured to transmit/receive the control signal in a form of differential signal;
a first switch (50, 62) configured to connect and disconnect a transmission/reception terminal (IO1) of the differential transmission/reception module (44, 56) and the power supply line (13a); and
a second switch (51, 63) configured to selectively switch and connect the other transmission/reception terminal (IO2) of the differential transmission/reception module (44, 56) and the transmission/reception terminal (IO) of the single-line transmission/reception module (45, 57) to the control signal line (13b), wherein the second switching module (44, 45, 50, 51, 56, 57, 62, 63) is set to the first control signal transmission state by setting the first switch (50, 62) to a disconnected state, and selecting the transmission/reception terminal (IO) of the single-line transmission/reception module (45, 57) with the second switch (51, 63), and the second switching module (44, 45, 50, 51, 56, 57, 62, 63) is set to the second control signal transmission state by setting the first switch (50, 62) to a connected state, and selecting the other transmission/reception terminal (IO2) of the differential transmission/reception module (44, 56) with the second switch (51, 63).

6. The transmission apparatus of Claim 1 **characterized by** further comprising:
an obtaining module (24c, 30c), wherein when an external device is connected via the power supply line (13a), the control signal line (13b), and the pair of differential lines (13c, 13d), the obtaining module (24c, 30c) is configured to obtain device information about the external device by communicating with the external device via the control signal line (13b);
a determining module (24c, 30c) configured to determine, based on the device information obtained by the obtaining module (24c, 30c), whether the external device is compatible with transmission of the power supply electric power using a plurality of lines and transmission of the control signal using a plurality of lines; and
a controller (24c, 30c), wherein when the determining module (24c, 30c) determines that the external device is compatible therewith, the controller (24c, 30c) is configured to set the first switching module (43, 47, 55, 59) to the second power supply electric power transmission state, and set the second switching module (44, 45, 50, 51, 56, 57, 62, 63) to the second control signal transmission state.

7. The transmission apparatus of Claim 6, **characterized in that** when the determining module (24c, 30c) determines that the external device is not compatible therewith, the controller (24c, 30c) is configured to set the first switching module (43, 47, 55, 59) to the first power supply electric power transmission state, and set the second switching module (44, 45, 50, 51, 56, 57, 62, 63) to the first control signal transmission state.

8. The transmission apparatus of Claim 1, **characterized in that** the transmission standard is MHL standard.

9. A transmission method based on a transmission standard for transmitting power supply electric power with a single power supply line (13a), transmitting a control signal with a single control signal line (13b), and transmitting a signal corresponding to any one of video and audio with a pair of differential lines (13c, 13d), the transmission method **characterized by** comprising:
when an external device is connected via the power supply line (13a), the control signal line (13b), and the pair of differential lines (13c, 13d), obtaining (S12 to S14) device information about the external device by communicating with the external device via the control signal line (13b), and determining (S15), based on the obtained device information, whether the external device is compatible with transmission of the power supply electric power using a plurality of lines and transmission of the control signal using a plurality of lines; and
when the external device is determined to be compatible therewith, transmitting power supply electric power using a plurality of lines including the power supply line (13a) and any one of the control signal line (13b) and the pair of differential lines (13c, 13d), and transmitting (S17) the control signal using a plurality of lines including the control signal line (13b) and any one of the power supply line (13a) and the pair of differential lines (13c, 13d).
